# FASCICULE DE BREVET EUROPEEN

(11) **EP 3 256 344 B1**
(45) Date de publication et mention de la délivrance du brevet: **08.05.2019**
(21) Numéro de dépôt: 16705066.5
(22) Date de dépôt: 09.02.2016
(51) Int. Cl.: B60N 2/28

(54) **SIEGE AUTO A STRUCTURE RIGIDE AMELIOREE**
FAHRZEUGSITZ MIT VERBESSERTER STARRER STRUKTUR
CAR SEAT WITH AN IMPROVED RIGID STRUCTURE

(30) Priorité: 09.02.2015 FR 1551025
(43) Date de publication de la demande: 20.12.2017
(73) Titulaire: Dorel France, 49309 Cholet Cedex (FR)
(72) Inventeur: RENAUDIN, François, 49300 Cholet (FR); GARNIER, Nicolas, 49230 Saint Germain sur Moine (FR)
(74) Mandataire: Vidon Brevets & Stratégie
(86) Numéro de dépôt international: PCT/EP2016/052664
(87) Numéro de publication internationale: WO 2016/128367

(56) Documents cités:
- WO-A2-2005/079239
- WO-A2-2005/117653
- GB-A- 2 482 410
- US-A1- 2007 039 139
- US-A1- 2013 113 267

## Description

### 1. Domaine de l'invention

Le domaine de l'invention est celui de la puériculture. Plus précisément, l'invention concerne les sièges auto pour enfants destinés à être installés sur la banquette d'un véhicule automobile.

Plus précisément encore, l'invention concerne une architecture particulière d'un tel siège pour enfant.

### 2. Art antérieur

Le confort et la sécurité des enfants lors de leur transport dans un véhicule automobile sont des axes importants du développement technique des sièges auto, de tels sièges auto sont par exemple divulgués dans les documents GB2482410 A et WO2005079239 A2. Les évolutions techniques tendent cependant à rendre les sièges auto lourds et volumineux, et donc peu maniables.

Basiquement, un siège auto comprend une assise et un dossier, constitués chacun d'une structure rigide (par exemple de l'acier) recouverte d'une portion additionnelle en mousse (par exemple de la mousse de polyuréthane). La majorité des sièges auto destinés à être fixés à une banquette de véhicule sont prévus pour être robustes, et comportent ainsi une structure de dossier et d'assise pleine et rigide.

Ces caractéristiques structurelles, si elles permettent d'assurer une sécurité et un confort relatifs, rendent le siège encombrant et pesant. Il en découle des difficultés d'installation, de manipulation, et de transfert du siège d'une voiture à une autre. En particulier, il existe des risques de mauvaise mise en place et fixation du siège sur la banquette automobile.

La forte rigidité de ces structures peut également poser des problèmes, notamment pour l'absorption de l'énergie, par exemple en cas de fort choc latéral.

D'une façon générale, il existe donc un besoin d'amélioration des sièges auto selon au moins deux aspects qui apparaissent antinomiques : le poids (et/ou l'encombrement) du siège et la sécurité de l'enfant.

### 3. Exposé de l'invention

La présente invention a pour objectif de pallier ces inconvénients de l'art antérieur.

Ces objectifs, ainsi que d'autres qui apparaîtront pas la suite, sont atteints à l'aide d'un siège auto pour enfant comprenant les caractéristiques de la revendication 1.

Il est ainsi possible de réduire le poids du siège auto tout en en augmentant l'efficacité, en termes de sécurité. En effet, une telle structure de dossier ajourée permet d'alléger de façon importante le poids total du siège, facilitant ainsi la manipulation, l'installation, ou encore le déplacement du siège d'un véhicule à un autre. Par ailleurs, de part sa forme spécifique, le sommet étant moins large que la base du dossier, cette structure est plus résistante aux efforts de torsion et aux charges non-symétriques que celle des sièges existants, en particulier ceux qui présentent une structure rectangulaire pleine. De tels efforts de torsion sont notamment rencontrés dans le cas de chocs complexes.

Selon un mode de réalisation particulier, ladite structure de dossier présente une forme générale de A, dont les montants latéraux se rapprochent l'un de l'autre, de la base dudit dossier vers son extrémité supérieure.

Ce rapprochement peut être notamment obtenu en mettant en oeuvre des montants inclinés, par rapport à l'horizontal, sur toute leur longueur ou sur une partie de celle-ci, ou en mettant en oeuvre des montants en plusieurs éléments « en escalier », se rapprochant l'un de l'autre « par morceaux » et non de façon continue.

Selon une approche particulière, ladite partie supérieure s'étend sur une hauteur représentant entre un tiers et deux tiers de la hauteur totale du dossier.

Bien sûr, plus cette hauteur est réduite, c'est-à-dire plus la partie évidée est importante, plus le poids est réduit.

Selon un mode de réalisation particulier, ladite structure rigide de dossier est formée de deux ensembles latéraux, comprenant chacun un des montants latéraux et une desdites lumières de passage de bretelle, solidarisés par au moins un élément de renfort.

Cette approche permet une fabrication simplifiée de la structure. L'ajout d'un élément de renfort permet de maintenir les deux ensembles fixes l'un par rapport à l'autre et de rigidifier l'ensemble. Dans d'autres modes de réalisation, et par exemple pour une fabrication en composite, une réalisation en une seule pièce est bien sûr possible.

Selon un mode de réalisation particulier, ladite structure rigide de dossier comprend deux éléments de renfort, respectivement à l'extrémité supérieure et à l'extrémité inférieure de ladite partie supérieure.

Ces éléments de renfort permettent de rigidifier la structure du dossier, en assurant la cohésion de l'ensemble.

Au moins un desdits éléments de renfort peut en outre guider et/ou retenir une sangle de solidarisation, dite sangle de « top tether », permettant la solidarisation d'une partie supérieure du dossier dudit siège avec un point d'accrochage prévu à cet effet dans un véhicule.

Cette structure est en effet bien adaptée à la mise en oeuvre d'une sangle de « top tether » pouvant circuler à l'intérieur du dossier, l'enrouleur se trouvant en partie inférieure du siège (par exemple dans l'assise).

Selon un aspect particulier, chacun desdits montants latéraux peut porter, à son extrémité inférieure, un élément d'accrochage d'une desdites bretelles.

Selon un mode de réalisation particulier, ladite assise présente une structure rigide d'assise en forme générale de A, dont les bords latéraux se rapprochent l'un de l'autre, de son extrémité proximale, proche du dossier, vers son extrémité distale, éloignée du dossier.

Ceci permet également de réduire l'encombrement et le poids, tout en offrant une meilleure résistance aux efforts de torsion.

Notamment, ladite structure d'assise peut définir une forme essentiellement triangulaire, évidée à l'intérieur, l'extrémité distale définissant une zone d'accrochage d'une patte d'entrejambe et/ou d'un enrouleur de sangle de « top tether ».

Selon un mode de réalisation particulier, l'extrémité proximale de ladite structure d'assise peut s'inscrire entre les extrémités inférieures des bords latéraux de ladite structure de dossier.

Selon une technique particulière, ladite structure rigide de dossier et/ou ladite structure rigide d'assise est réalisée au moins en partie en tôle emboutie.

Cette approche apporte rigidité et légèreté à l'assise. Il est également possible de réaliser ces structures par exemple en composite ou en plastique.

Selon un mode de réalisation particulier de l'invention, ladite assise et ledit dossier peuvent prendre une position pliée, dans laquelle ladite assise est ramenée contre ledit dossier, pour former un ensemble compact, et une position dépliée, dans laquelle un enfant peut être installée dans ledit siège.

La position repliée du siège, conjointement à son faible poids, facilite le transport, la manipulation et le rangement du siège lorsqu'il n'est pas utilisé.

Dans ce cas, l'extrémité proximale de ladite structure d'assise peut être montée sur un axe s'étendant entre les extrémités inférieures des bords latéraux de ladite structure de dossier.

Cet axe constitue l'axe de rotation permettant à l'assise mobile d'être repliée contre le dossier.

Selon un mode de réalisation particulier, deux pinces de connexion à des emplacements prévus à cet effet dans le véhicule sont montées mobiles en rotation à la base dudit dossier, indépendamment l'une de l'autre.

Ainsi, le siège auto peut être arrimé à une banquette de véhicule comportant les éléments d'accrochage adaptés. La mobilité en rotation et leur indépendance permet aux pinces d'absorber une partie l'énergie des chocs, qui n'est donc pas intégralement transmise au siège.

Selon un mode de réalisation particulier, deux pinces de connexion à des emplacements prévus à cet effet dans le véhicule sont montées mobiles à la base dudit dossier, entre une position déployée, permettant ladite connexion, et une position de rangement, dans un logement prévu à cet effet dans ledit dossier.

Ceci permet que le siège prenne une forme compacte lorsqu'il n'est pas utilisé et qu'il doit être rangé/stocké.

### 4. Liste des figures

D'autres caractéristiques et avantages de l'invention apparaîtront plus clairement à la lecture de la description suivante de modes de réalisation, donnés à titre de simples exemples illustratifs et non limitatifs, et des figures annexées, parmi lesquels :

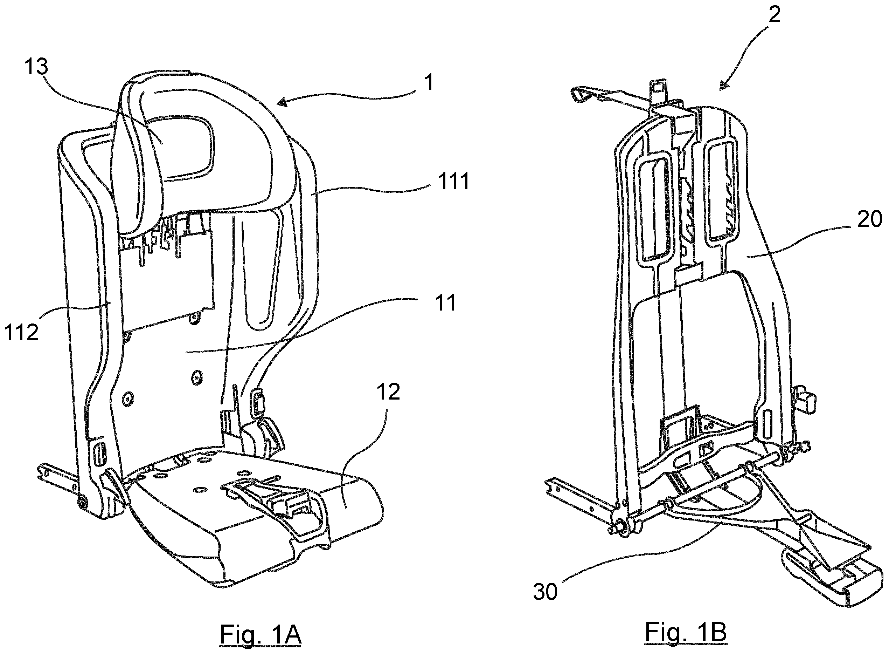

- les **figures 1A et 1B** sont des vues en trois dimensions du siège auto et de sa structure sous-jacente :
   - **figure 1A** : vue du siège auto selon un mode de réalisation particulier ;
   - **figure 1B** : vue de la structure du siège comprenant une structure de dossier et une structure d'assise.
- la **figure 2** est une vue de face de la structure de dossier selon un mode de réalisation particulier.
- les **figures 3A****,** **3B, 3C et 3D** présentent les différents éléments de la structure de dossier :

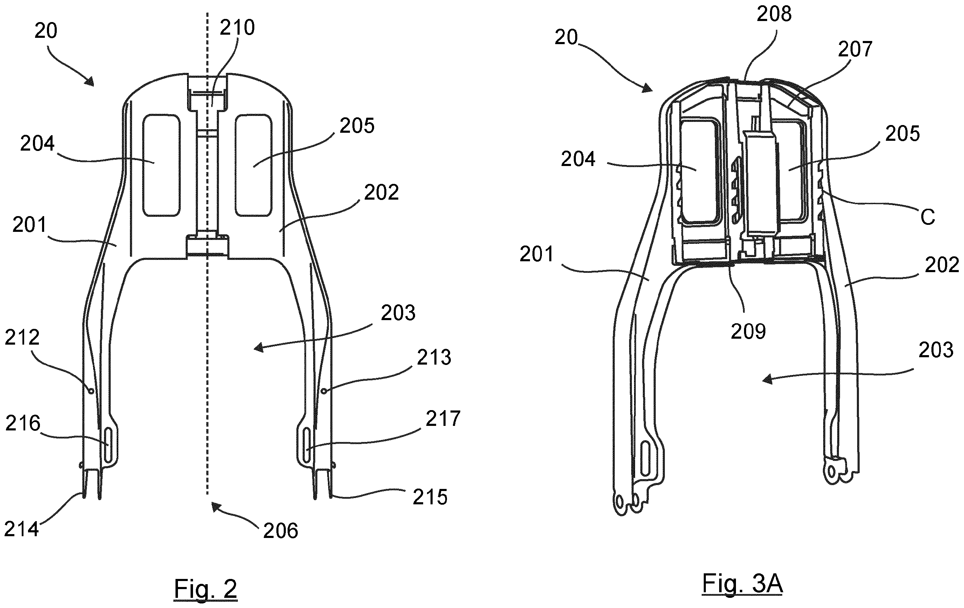

   - **figure 3A** : vue en trois dimensions de la structure de dossier ;

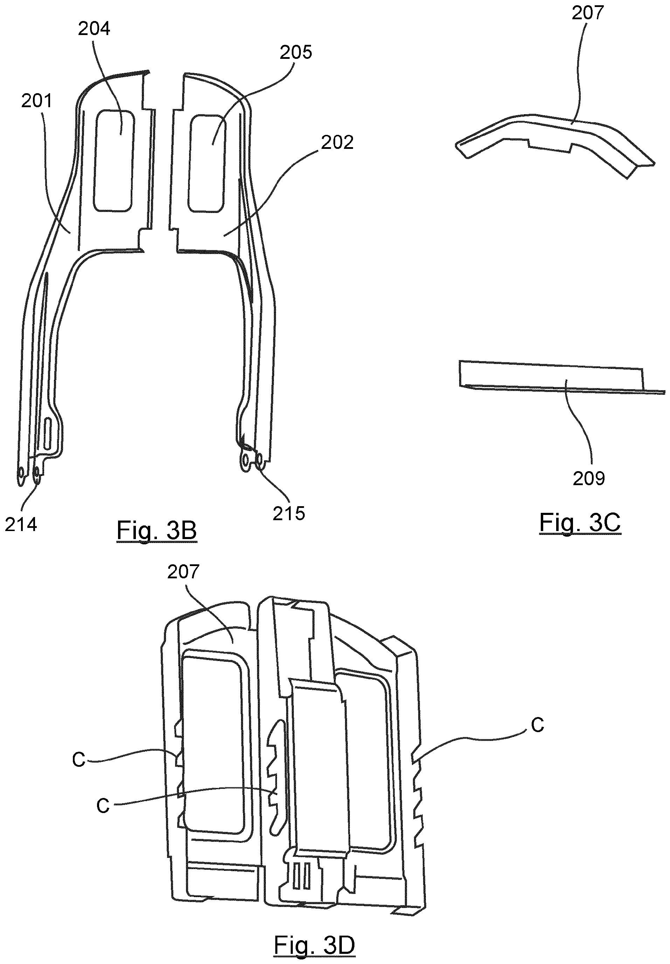

   - **figure 3B** : vue en trois dimensions des deux ensembles latéraux ;
   - **figure 3C** **:** vue en trois dimensions des deux éléments de renforts inférieur et supérieur;
   - **figure 3D** **:** vue en trois dimensions de l'élément de renfort central.

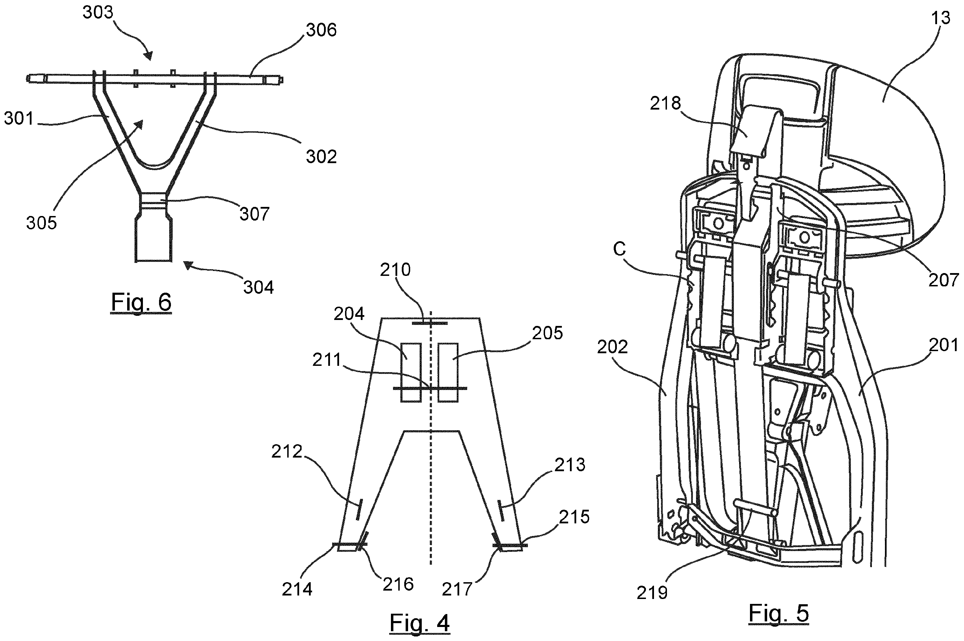

- la **figure 4** est un schéma simplifié de la structure de dossier, illustrant les zones de retenue de l'enfant au siège auto, et du siège auto au siège du véhicule.
- la **figure 5** est une vue du système dit de « top tether » de fixation du siège auto à un véhicule automobile.
- la **figure 6** présente une vue de dessus de la structure de l'assise du siège auto selon un premier mode de réalisation.

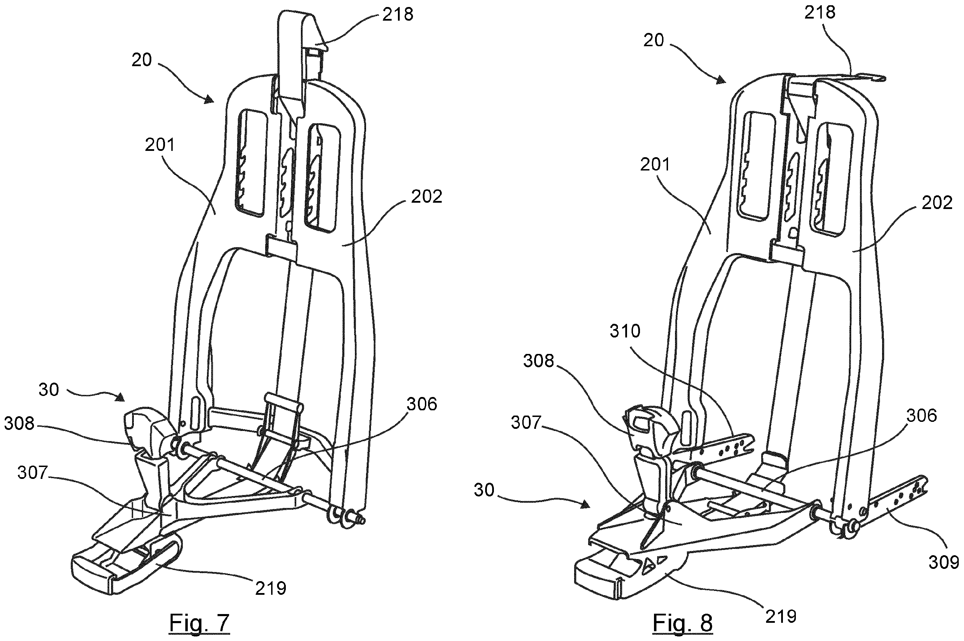

- la **figure 7** présente une vue en trois dimensions de la structure de siège, muni de l'assise de la figure 6.
- la **figure 8** présente une vue en trois dimensions de la structure de siège, muni d'une variante de l'assise.

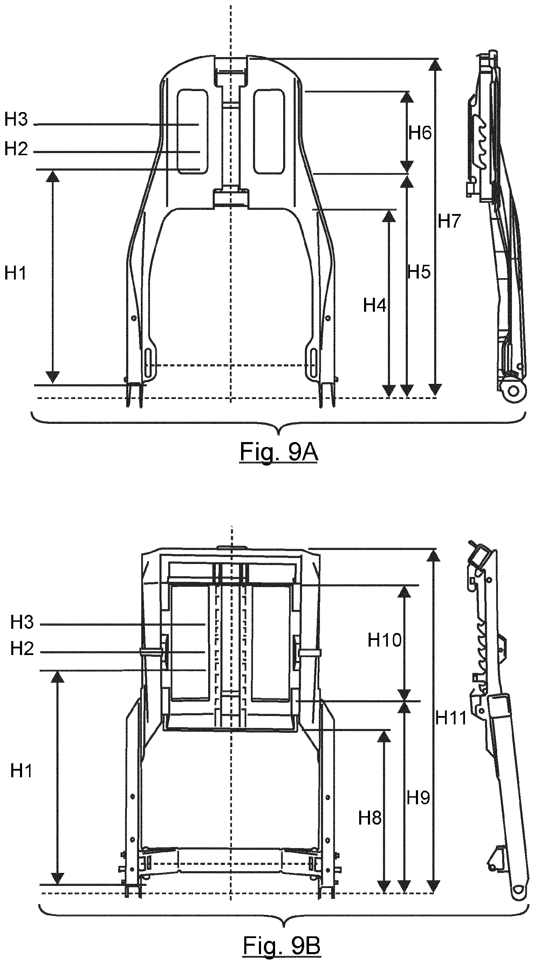

- les **figures 9A et 9B** illustrent deux variantes de réalisation de la structure du dossier, respectivement : structure emboutie et structure mécano-soudée ;

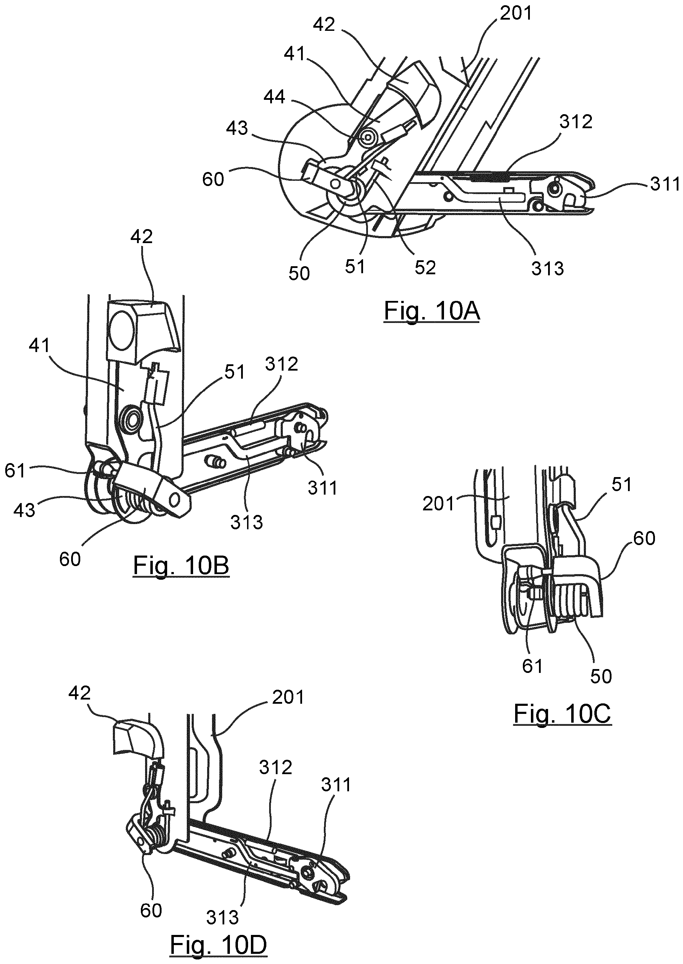

- les **figures 10A, 10B, 10C, et 10D** présentent des vues du mécanisme des pinces de pinces de connexion, selon un mode de réalisation ;

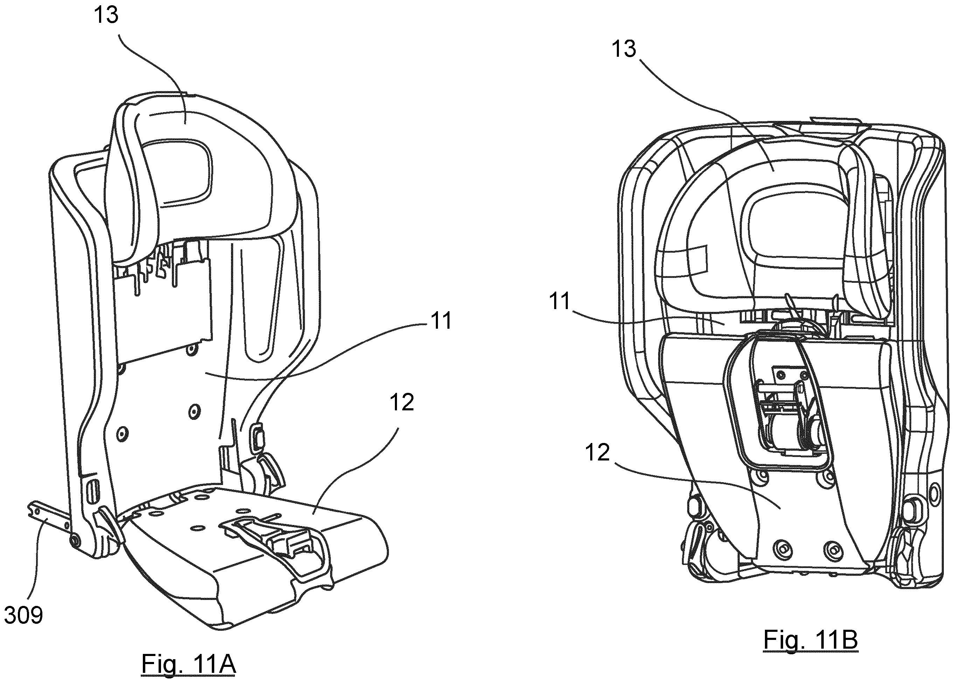

- les **figures 11A et 11B** représentent les deux positions dépliée et pliée que peut prendre le siège auto :
   - **figure 11A** **:** position dépliée ;
   - **figure 11B** : position pliée.

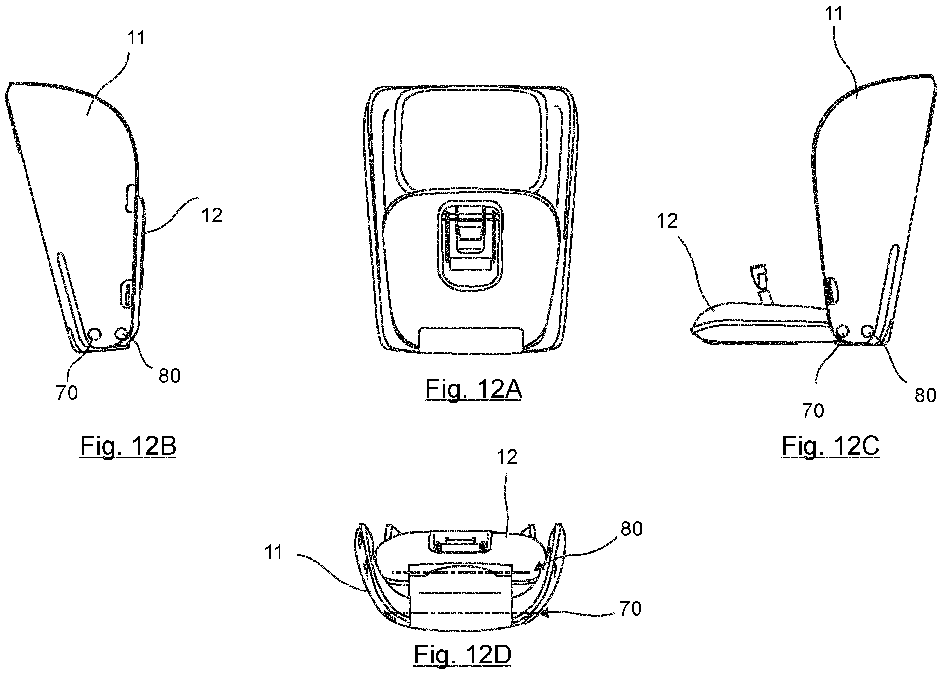

- les **figures 12A, 12B, 12C et 12D** illustrent le siège auto selon une variante de réalisation, dans laquelle l'axe de rotation de l'assise diffère de l'axe de rotation des pinces de connexion, respectivement :
   - **figure 12A** : vue de face ;
   - **figure 12B** **:** vue de gauche ;
   - **figure 12C** : vue de droite ;
   - **figure 12D** **:** vue de dessous.

### 5. Description d'un mode de réalisation de l'invention

### 5.1 Principe général

L'invention concerne une nouvelle approche de la structure sous-jacente d'un siège auto pour enfant, comprenant un dossier et une assise, permettant d'augmenter la sécurité de l'enfant et de réduire le poids du siège.

En particulier, l'invention comporte une structure rigide de dossier en forme générale de A, (pouvant également s'apparenter à une forme « de Tour Eiffel »), tronquée à son sommet. Cette structure est caractérisée par des montants latéraux non parallèles, mais se rapprochant l'un de l'autre, de la base du dossier vers son extrémité supérieure, et une partie inférieure évidée entre les montants latéraux.

Cette approche permet de fournir une structure légère, nécessitant peu de matière, et offrant une résistance élevée en cas de choc, et en particulier à la torsion, en cas de choc latéral. Il est ainsi possible d'évider la partie inférieure du dossier, entre les deux montants, et donc de réduire fortement le poids du siège.

La partie supérieure de la structure de dossier peut également être munie de deux lumières de passage de bretelles d'un harnais de sécurité.

Les deux montants latéraux sont reliés par deux traverses, une première traverse supérieure, au niveau de la partie supérieure, et une seconde traverse médiane (correspondant à la « barre du A »).

Une telle structure de siège, apte à recevoir notamment des éléments d'habillage servant de support à l'enfant (garnitures de mousse, pièces plastiques, ...), permet de réduire le poids et l'encombrement du siège du fait de son architecture ajourée. Par ailleurs, cette structure de siège présente l'avantage d'augmenter la sécurité de l'enfant installé dans le siège, en particulier dans les cas où le siège est soumis à des forces non-symétriques, comme lors des chocs latéraux. En effet, une telle structure, présentant une section d'extrémité haute du dossier plus petite que la section d'extrémité basse du dossier, fournit une résistance à la torsion supérieure aux solutions mettant en oeuvre une structure rectangulaire et/ou pleine.

### 5.2 Mode de réalisation particulier

Le siège auto 1 pour enfant de l'invention est représenté **figure 1A****.** Il comprend un dossier 11 muni de parois latérales de protection 111, 112 et une assise 12. Dans le mode de réalisation illustré, cette assise 12 est mobile en rotation par rapport au dossier 11. L'invention s'avère particulièrement adaptée à la réalisation d'un tel siège pliable. Cependant, elle s'applique également aux sièges présentant une structure assise / dossier fixe.

Le siège comprend également, dans ce mode de réalisation, une têtière 13 qui peut être réglée en hauteur afin de s'ajuster à la taille et à la morphologie d'un enfant, et dont le réglage agit sur la position du harnais.

Le dossier 11 et l'assise 12 sont de préférence réalisés à partir de polypropylène expansé (« EPP ») ou de polypropylène (« PP »). Ces éléments peuvent être directement thermoformés sur la structure sous-jacente 2 rigide composée d'une structure de dossier 20 et d'une structure d'assise 30, comme représenté sur la **figure 1B****.** Ces structures de dossier 20 et d'assise 30 sont par exemple réalisées au moins en partie en tôle emboutie, en composite ou en plastique.

La **figure 2** **et la** **figure 9A** illustrent la structure de dossier 20 réalisée en tôle emboutie, selon un mode de réalisation préférentiel. La structure présente une forme pouvant s'apparenter à un A, dont les montants latéraux 201, 202 se rapprochent l'un de l'autre dans la partie supérieure de la structure de dossier.

La structure de dossier est formée symétriquement par rapport à un axe vertical 206. La partie inférieure de la structure présente un évidement 203 entre les montants latéraux 201, 202. La partie supérieure de la structure présente quant à elle deux lumières 204, 205 de forme rectangulaire allongée, adaptées pour recevoir les bretelles de harnais du siège auto, ainsi que la têtière 13. Ces lumières, d'une longueur H6, sensiblement égale à 119 mm, sont elles aussi disposées symétriquement par rapport à l'axe vertical 206, et globalement centrées dans la partie supérieure de la structure, à une hauteur H5 de 321 mm par rapport à l'assise. H1, H2 et H3, correspondant aux dimensions 309+/-7 mm, 329+/-7mm, et 362+/-7mm, définissent trois hauteurs de réglage des bretelles du harnais. La forme des lumières et leur position ne sont néanmoins pas limitées à la description faite ci-dessus. Avantageusement, la structure de dossier mesure 486 mm de hauteur (H7), l'évidement 203 s'étendant sur une hauteur H4 de 269 mm.

La **figure 9B** présente une variante de réalisation selon laquelle la structure de dossier 20 est réalisée par un procédé de mécano-soudure. Cette structure mécano-soudée présente des dimensions quelque peu différentes de la structure en tôle emboutie. La hauteur totale H11 de la structure est ainsi d'environ 550 mm, tandis que la hauteur H8 de l'évidement défini dans la partie inférieure est de 234 mm. Les lumières, qui présentent une hauteur H10 de 160 mm, sont réalisées dans la partie supérieure de la structure, à une cote H9 sensiblement égale à 280 mm.

Toutes les dimensions données ci-dessus sont bien sûr indicatives et non limitatives, et correspondent à des modes de réalisation particuliers, potentiellement non définitifs.

Ainsi, le ratio entre la largeur du sommet et la largeur de la base est compris environ entre 0,4 et 0,9 (par exemple environ 0,5 pour le mode de réalisation de la figure 9A et environ 0,9 pour le mode de réalisation de la figure 9B). Ceci permet de conférer une forme générale de dossier en trapèze, défini par les points d'extrémité du sommet et de la base de la structure. Cette forme permet d'obtenir une bonne efficacité notamment vis-à-vis des efforts de torsion, par rapport à une structure classique définissant un rectangle.

La hauteur de la partie basse, évidée, représente entre 1/3 et 2/3 de la hauteur totale de la structure du dossier, et par exemple environ la moitié de la hauteur totale, pour le mode de réalisation illustré d'une structure emboutie, et environ 2/5 de la hauteur totale, pour le mode de réalisation illustrée s'une structure mécano-soudée.

La forme générale de A, ajourée, de cette structure de dossier permet d'une part d'alléger de façon importante le poids total du siège, et ainsi d'en faciliter la manipulation, l'installation sur une banquette, ou encore le déplacement d'une voiture à une autre, c'est-à-dire plus généralement son transport. D'autre part, cette structure présente l'avantage d'être plus résistante aux efforts de torsion que celle d'un siège présentant une structure rectangulaire pleine ou en forme générale de H. Les efforts de torsion, rencontrés en particulier dans le cas de chocs latéraux et/ou complexes, sont caractérisés par des charges non-symétriques appliquées notamment au dossier du siège. La structure de dossier, selon l'invention, permet donc d'augmenter sensiblement la sécurité de l'enfant dans son siège.

Les figures **3A** à **3D** présentent les différents éléments qui composent la structure de dossier 20, selon un mode de réalisation particulier. Les deux montants 201, 202 et leur lumière respective 204, 205 constituent chacun un ensemble latéral, comme illustré **figure 3B****.** Le fait de réaliser la structure à l'aide de deux ensembles symétriques simplifie la fabrication du siège (par exemple en emboutissage ou mécano-soudure) et l'outillage nécessaire.

Ils sont maintenus fixes l'un par rapport à l'autre au moyen d'un élément de renfort 207 présentant sensiblement la même forme que la partie supérieure de la structure (voir **figure 3D**). Cet élément de renfort 207, réalisé par exemple en tôle embouti ou en matériau composite, comporte deux lumières similaires aux lumières 204, 205 des deux montants 201, 202. Les bordures des lumières sont munies d'une crémaillère C à trois dents, correspondant aux trois hauteurs H1, H2, H3 de réglage des bretelles du harnais. Dans ce mode de réalisation, l'élément de renfort 207 comporte également une partie centrale en saillie, permettant d'éviter un contact entre la sangle de « top tether » 218 et la têtière 13 (de cette façon, la sangle de « top tether » tendue n'est pas en contact avec la crémaillère C, et n'empêche donc pas le déplacement de la têtière 13 le long de cette crémaillère).

Deux autres éléments de renfort 208, 209 rigidifient la structure de dossier. Ils sont placés à l'extrémité supérieure et à l'extrémité inférieure de la partie supérieure de la structure, entre les montants et l'élément de renfort 207, comme illustré sur les **figures 3A** et **3C****.** Ces éléments de renfort 208, 209 présentent ainsi une forme s'adaptant aux contours de la partie supérieure de la structure du dossier.

Dans un autre mode de réalisation, cette structure peut être réalisée en un seul ensemble comportant les deux montants 201, 202 et leurs lumières 204, 205, par exemple dans un matériau composite.

Un siège auto doit, d'une part, retenir l'enfant au siège, et d'autre part, fixer le siège auto à une banquette de véhicule automobile. La **figure 4** schématise une structure de dossier du siège auto, selon un mode de réalisation particulier, et les différentes zones de retenue de l'enfant au siège d'une part, et du siège au véhicule d'autre part.

Cinq zones de retenue de l'enfant au siège 211, 212, 213, 216, 217 sont prévues, correspondant aux points d'attache d'un harnais 5-points : une première zone destinée à la fixation des bretelles du harnais d'épaule 211, deux zones symétriques destinées à la fixation des bretelles du harnais de cuisse 212, 213, et deux zones symétriques destinées à la fixation de la patte d'entrejambe 216, 217.

Trois autres zones 210, 214, 215 permettent de lier le siège auto à une banquette de véhicule automobile : la zone 210 reçoit un système dit de « top tether » tandis que les zones symétriques 214, 215 sont destinées à recevoir des pinces de connexion, par exemple de type ISOFIX.

Ces zones de retenue sont également représentées sur la **figure 2****.** Bien entendu, l'aspect et la position de ces zones n'est pas limité à la représentation qu'il en est faite dans ce mode de réalisation particulier.

Le système dit de « top tether », comprend une sangle de solidarisation 218, munie dans son extrémité d'un crochet, permettant la solidarisation de la partie supérieure du dossier du siège avec un point d'accrochage prévu à cet effet dans le véhicule automobile dans lequel il est installé. Dans le mode de réalisation illustré, la sangle de « top tether » est guidée dans le dossier, et retenue par une première de ses extrémités, au niveau de l'assise, comme représenté **figures 5** **et** **7****.**

Outre la structure particulière de dossier 20, la structure du siège auto peut comprendre également une structure particulière d'assise 30, dont un exemple est représenté **figure 6****.** Une telle structure d'assise présente elle aussi une forme générale de A, qu'il est possible d'assimiler à une forme essentiellement triangulaire ou trapézoïdale. Les bords latéraux 301, 302 de la structure d'assise se rapprochent l'un de l'autre, depuis son extrémité proximale 303, c'est-à-dire la plus proche du dossier, vers son extrémité distale 304, c'est-à-dire la plus éloignée du dossier. La structure d'assise comporte un évidement 305 entre ses bords latéraux 301, 302, de forme lui-aussi globalement triangulaire.

Ces caractéristiques permettent à nouveau de réduire le poids de la structure d'assise, et plus globalement du siège auto, et également d'offrir une bonne résistance, notamment à la torsion.

L'extrémité distale 304 de la structure d'assise comprend une zone d'accrochage 307 d'un élément 308 destiné, dans ce mode de réalisation, à recevoir l'attache d'une patte d'entrejambe d'un harnais et d'un élément de fixation (et le cas échéant d'enroulement) de la sangle de « top tether », pouvant notamment comprendre une poignée, comme représenté sur les **figures 7** et **8****.** L'extrémité proximale 303 est montée en rotation sur un axe 306 qui prend place entre les montants 201, 202 de la structure de dossier, dans leur partie inférieure.

Dans ce mode de réalisation, l'axe 306 est solidaire de l'assise et l'ensemble formé par l'assise et l'axe est libre en rotation par rapport au dossier (ce qui permet de mettre en oeuvre un mécanisme « anti-misuse » de contrôle de la tension de la sangle de « top tether », non décrit). Dans un autre mode de réalisation, ne présentant pas un tel mécanisme « anti-misuse », il peut être envisagé d'avoir l'extrémité proximale en rotation sur un axe fixe.

L'assise décrite selon un premier mode de réalisation dans la **figure 6** est représentée intégrée à la structure générale du siège auto dans la **figure 7****.** Une variante de réalisation de cette assise 30 est représentée **figure 8****.** La forme générale de cette variante d'assise reste essentiellement triangulaire mais présente une surface plus étendue.

Ces deux approches sont notamment adaptées à la mise en oeuvre de moyens (non représentés) de contrôle de la tension de la sangle de « top tether » et/ou de tension de celle-ci, montés respectivement sur le dossier et sur l'assise.

Deux pinces de connexion 309, 310, par exemple de type ISOFIX, représentées **figures 8****,** permettent de solidariser le siège auto à des points d'accrochage prévus à cet effet dans la banquette du véhicule automobile.

Selon un mode de réalisation, ces pinces 309, 310 sont montées en rotation autour de l'axe 306, de façon indépendante l'une de l'autre.

Ces pinces peuvent être rangées, lorsqu'elles ne sont pas utilisées, dans des emplacements 214, 215 prévus à cet effet dans l'extrémité basse des montants 201, 202 de la structure de dossier. Ces emplacements 214, 215 présentent un profil de U renversé et sont percés latéralement de perçages adaptés pour recevoir l'axe de rotation de l'assise et des pinces. Ils sont représentés sur les **figures 2****,** **4** **et** **9A et 9B****.**

Les pinces 309, 310 possèdent un crochet d'ancrage 311 se connectant aux éléments d'ancrage prévus dans le véhicule, ce crochet étant mobile en rotation par rapport au corps de pince. La partie supérieure du crochet 311 est liée à un ressort 312, lui-même lié à une fourche 313 mobile en translation.

Dans leur position d'utilisation, les pinces 309, 310 sont connectées aux éléments d'ancrage du véhicule, tout en restant mobiles en rotation par rapport aux montants 201, 202 du dossier. Ces mouvements indépendants permettent en cas de choc une meilleure dissipation de l'énergie, en particulier en coopération avec la forme de la structure du dossier et de l'assise.

Un système de déverrouillage est prévu dans l'extrémité basse de chacun des montants 201, 202 de la structure de dossier, comme représenté sur les **figures 10A à 10D****.** Ce système comprend :
- une commande de déverrouillage comportant un bras 41 dont une première extrémité, orientée vers le haut du montant, est munie d'un bloc 42, et dont une deuxième extrémité, orientée vers le bas du montant, comporte une portion libre 43. Ce bras 41 est lié en rotation au montant 201 par une liaison pivot 44;
- un ressort 50 comportant deux tiges 51, 52, une première tige 51 étant reliée à la première extrémité du bras de la commande de déverrouillage, une deuxième tige 52 étant fixée au montant 201 de la structure de dossier ;
- un témoin de verrouillage 60, monté en pivot glissant sur l'axe du ressort dans une première de ses extrémités, et muni d'une tige 61 dans une deuxième de ses extrémités. Cette tige 61 est en liaison pivot avec la fourche 313 pilotant le la rotation du crochet d'ancrage 311 de la pince 309, par l'intermédiaire du ressort 312.

Le fonctionnement du système est donc le suivant : en position d'utilisation, les pinces 309, 310 sont arrimées aux points d'ancrage du véhicule, les commandes de déverrouillage étant alignées verticalement avec les montants 201, 202, comme illustré par les **figures 10B, 10C et 10D****.** Lorsqu'un utilisateur souhaite déverrouiller les pinces 309, 310 afin de déplacer le siège auto par exemple, il agit sur le bloc 42 et abaisse ainsi le bras 41 de la commande de déverrouillage. Le bras 41, en rotation par rapport au montant 201, actionne le témoin 60 de verrouillage par l'intermédiaire de sa portion libre 43. Le témoin 60, en se déplaçant, agit à son tour sur la fourche 313, qui en translatant agit sur le ressort 312, qui fait pivoter le crochet d'ancrage 311 vers le haut. Les pinces peuvent alors être retirées des emplacements d'ancrage du véhicule.

Le bras 41 de la commande de verrouillage, en s'abaissant, exerce un effort sur la première tige 51 du ressort 50, celui-ci étant maintenu fixe par rapport au montant 201 du dossier grâce à sa deuxième tige 52. Ainsi, le bras 41 reprend naturellement sa position initiale lorsque l'utilisateur relâche la pression.

Ces pinces peuvent être redressées puis maintenues en position dans des logements prévus à l'arrière du dossier du siège. Cette caractéristique permet de limiter l'encombrement du siège lorsqu'il n'est pas utilisé, et ainsi faciliter son transport et son stockage.

Il est à noter que cette solution particulière de pinces Isofix peut, intégralement ou partiellement, être mise en oeuvre sur d'autres types de siège auto, notamment non pliables.

Ce mode de rangement des pinces, et le fait qu'elles peuvent être déployées indépendamment l'une de l'autre, facilite l'installation, en particulier dans le cas d'une siège pliable (dont l'installation des pinces se fait alors que le siège est encore plié). La mobilité en rotation des pinces et de l'assise permet en outre une adaptation du siège auto au plus près de la banquette du véhicule.

L'axe 306 de réception assure la liaison entre l'assise et le dossier du siège et la mobilité en rotation de l'un par rapport à l'autre. Il permet notamment de déplacer en rotation l'assise 12 par rapport au dossier 11.

Les **figures 11A et 11B** illustrent les deux positions que peut prendre le siège auto selon le mode de réalisation décrit. Ainsi, le siège auto peut prendre une première position dépliée **(****figure 11A****),** dans laquelle l'assise 12 est éloignée du dossier 11 de manière à installer un enfant dans le siège, et une deuxième position repliée **(****figure 11B****),** dans laquelle l'assise 12 est ramenée contre le dossier 11, pour former un ensemble compact.

La position pliée du siège auto permet que celui-ci soit aisément transporté, transféré d'un véhicule à un autre, ou encore stocké en cas de non-utilisation. La possibilité de replier le siège combinée au gain de poids sur le siège, de par ses structures de dossier et d'assise en forme de A, joue un rôle prépondérant dans le confort d'utilisation du siège.

Une variante de réalisation de l'articulation du siège auto est illustrée par les **figures 12A, 12B, 12C** et **12D****.** Dans cette variante, l'axe de rotation de l'assise 70 par rapport au dossier est indépendant de l'axe d'articulation des pinces de connexion 80 avec le dossier. L'axe de rotation des pinces 50 est identique à l'axe de rotation 306 du mode de réalisation décrit précédemment tandis que l'axe de rotation de l'assise est décalé à proximité de la face avant du dossier. Ce décalage de l'assise vers l'avant permet d'optimiser le passage de la position dépliée à la position repliée du siège, et/ou d'offrir un meilleur confort à l'enfant, en permettant de prévoir une assise plus épaisse au voisinage du dossier et/ou un dossier plus épais au voisinage de l'assise.

Bien que la présente invention ait été décrite en référence aux modes de réalisation particuliers illustrés, celle-ci n'est nullement limitée par ces modes de réalisation, mais ne l'est que par les revendications annexées. On notera que des changements ou modifications pourront être apportées par l'Homme du Métier.

## Revendications

1. Siège auto (1) pour enfant, comprenant une assise (12) et un dossier (11), ledit dossier (11) présentant une structure rigide de dossier (20) dont la largeur en son sommet est inférieure à la largeur de sa base, une partie supérieure de ladite structure de dossier (20) présentant deux lumières (204, 205) de passage d'une bretelle de harnais, **caractérisé en ce qu'**une partie inférieure de ladite structure de dossier (20) est évidée entre des montants latéraux (201, 202), ladite partie inférieure s'étendant sur une hauteur représentant entre un tiers et deux tiers de la hauteur totale de ladite structure de dossier (20).

2. Siège auto (1) selon la revendication 1, **caractérisé en ce que** ladite structure de dossier (20) présente une forme générale de A, dont les montants latéraux (201, 202) se rapprochent l'un de l'autre, de la base dudit dossier (11) vers son extrémité supérieure,

3. Siège auto (1) selon l'une quelconque des revendications 1 et 2, **caractérisé en ce que** ladite partie supérieure s'étend sur une hauteur représentant entre un tiers et deux tiers de la hauteur totale du dossier (11).

4. Siège auto (1) selon l'une quelconque des revendications 1 à 3, **caractérisé en ce que** ladite structure rigide de dossier (20) est formée de deux ensembles latéraux, comprenant chacun un des montants latéraux (201, 202) et une desdites lumières (204, 205) de passage de bretelle, solidarisés par au moins un élément de renfort (207).

5. Siège auto (1) selon la revendication 4, **caractérisé en ce que** ladite structure rigide de dossier (20) comprend deux éléments de renfort (208, 209), respectivement à l'extrémité supérieure et à l'extrémité inférieure de ladite partie supérieure.

6. Siège auto (1) selon l'une quelconque des revendications 4 et 5, **caractérisé en ce qu'**au moins un desdits éléments de renfort guide et/ou retient une sangle de solidarisation (218), dite sangle de « top tether », permettant la solidarisation d'une partie supérieure du dossier (11) dudit siège avec un point d'accrochage prévu à cet effet dans un véhicule.

7. Siège auto (1) selon l'une quelconque des revendications 1 à 6, **caractérisé en ce que** chacun desdits montants latéraux (201, 202) porte, à son extrémité inférieure, un élément d'accrochage (216, 217) d'une desdites bretelles.

8. Siège auto (1) selon l'une quelconque des revendications 1 à 7, **caractérisé en ce que** ladite assise (12) présente une structure rigide d'assise (30) en forme générale de A, dont les bords latéraux (301, 302) se rapprochent l'un de l'autre, de son extrémité proximale (303), proche du dossier (11), vers son extrémité distale (304), éloignée du dossier (11).

9. Siège auto (1) selon la revendication 8, **caractérisé en ce que** ladite structure d'assise (30) définit une forme essentiellement triangulaire, évidée à l'intérieur, l'extrémité distale (304) définissant une zone d'accrochage (307) d'une patte d'entrejambe et/ou d'un enrouleur de sangle de « top tether ».

10. Siège auto (1) selon l'une quelconque des revendications 8 et 9, **caractérisé en ce que** l'extrémité proximale (303) de ladite structure d'assise (30) s'inscrit entre les extrémités inférieures des bords latéraux (301, 302) de ladite structure de dossier (20).

11. Siège auto (1) selon l'une quelconque des revendications 1 à 10, **caractérisé en ce que** ladite structure rigide de dossier (20) et/ou ladite structure rigide d'assise (30) est réalisée au moins en partie en tôle emboutie.

12. Siège auto (1) selon l'une quelconque des revendications 1 à 11, **caractérisé en ce que** ladite assise (12) et ledit dossier (11) peuvent prendre une position pliée, dans laquelle ladite assise (12) est ramenée contre ledit dossier (11), pour former un ensemble compact, et une position dépliée, dans laquelle un enfant peut être installé dans ledit siège.

13. Siège auto (1) selon les revendications 10 et 12, **caractérisé en ce que** l'extrémité proximale de ladite structure d'assise (30) est montée sur un axe (306) s'étendant entre les extrémités inférieures des bords latéraux (301, 302) de ladite structure de dossier (20).

14. Siège auto (1) selon l'une quelconque des revendications 1 à 13, **caractérisé en ce que** deux pinces de connexion (309, 310) à des emplacements prévus à cet effet dans le véhicule sont montées mobiles en rotation à la base dudit dossier (11), indépendamment l'une de l'autre.

15. Siège auto (1) selon l'une quelconque des revendications 1 à 14, **caractérisé en ce que** deux pinces de connexion (309, 310) à des emplacements prévus à cet effet dans le véhicule sont montées mobiles à la base dudit dossier (11), entre une position déployée, permettant ladite connexion, et une position de rangement, dans un logement prévu à cet effet dans ledit dossier (11).

## Patentansprüche

1. Autositz (1) für Kinder, der eine Sitzfläche (12) und eine Rückenlehne (11) enthält, wobei die Rückenlehne (11) eine starre Rückenlehnenstruktur (20) aufweist, deren Breite in ihre Spitze kleiner ist als die Breite ihrer Basis, wobei ein oberer Abschnitt der Rückenlehnenstruktur (20) zwei Öffnungen (204, 205) für einen Durchlass eines Schultergurts aufweist,
**dadurch gekennzeichnet, dass**
ein unterer Abschnitt der Rückenlehnenstruktur (20) zwischen zwei seitlichen Stützen (201, 202) ausgespart ist, wobei sich der untere Abschnitt über eine Höhe erstreckt, die zwischen einem Drittel und zwei Dritteln der Gesamthöhe der Rückenlehnenstruktur (20) darstellt.

2. Autositz (1) nach Anspruch 1, **dadurch gekennzeichnet, dass** die Rückenlehnenstruktur (20) eine allgemeine Form eines A aufweist, dessen seitliche Stützen (201, 202) sich von der Basis der Rückenlehne (11) in Richtung ihres oberen Endes einander nähern.

3. Autositz (1) nach einem der Ansprüche 1 und 2, **dadurch gekennzeichnet, dass** sich der obere Abschnitt über eine Höhe erstreckt, die zwischen einem Drittel und zwei Dritteln der Gesamthöhe der Rückenlehne (11) darstellt.

4. Autositz (1) nach einem der Ansprüche 1 bis 3, **dadurch gekennzeichnet, dass** die starre Rückenlehnenstruktur (20) aus zwei seitlichen Einheiten gebildet ist, die jeweils eine der seitlichen Stützen (201, 202) und eine der Öffnungen (204, 205) für den Schultergurtdurchlass enthalten und die durch zumindest ein Verstärkungselement (207) verbunden sind.

5. Autositz (1) nach Anspruch 4, **dadurch gekennzeichnet, dass** die starre Rückenlehnenstruktur (20) zwei Verstärkungselemente (208, 209), jeweils an dem oberen Ende und an dem unteren Ende des oberen Abschnitts, enthält.

6. Autositz (1) nach einem der Ansprüche 4 und 5, **dadurch gekennzeichnet, dass** zumindest eines der Verstärkungselemente einen Befestigungsgurt (218), genannt "top tether"-Gurt, führt und/oder hält, der eine Befestigung eines oberen Abschnitts der Rückenlehne (11) des Sitzes mit einer dafür vorgesehenen Kopplungsstelle in einem Fahrzeug ermöglicht.

7. Autositz (1) nach einem der Ansprüche 1 bis 6, **dadurch gekennzeichnet, dass** jede der seitlichen Stützen (201, 202) an ihrem unteren Ende ein Kopplungselement (216, 217) für einen der Schultergurte aufweist.

8. Autositz (1) nach einem der Ansprüche 1 bis 7, **dadurch gekennzeichnet, dass** die Sitzfläche (12) eine starre Sitzflächenstruktur (30) in allgemeiner Form eines A aufweist, deren seitliche Ränder (301, 302) sich von ihrem nahen Ende (303), nahe der Rückenlehne (11), in Richtung ihres fernen Endes (304), von der Rückenlehne (11) entfernt, einander nähern.

9. Autositz (1) nach Anspruch 8, **dadurch gekennzeichnet, dass** die Sitzflächenstruktur (30) eine im Wesentlichen dreieckige Form definiert, die im Inneren ausgespart ist, wobei das ferne Ende (304) einen Kopplungsbereich (307) für eine Schrittlasche und/oder für eine "top tether"-Gurt-Aufwickelvorrichtung definiert.

10. Autositz (1) nach einem der Ansprüche 8 bis 9, **dadurch gekennzeichnet, dass** das nahe Ende (303) der Sitzflächenstruktur (30) sich zwischen den unteren Enden der seitlichen Ränder (301, 302) der Rückenlehnenstruktur (20) befindet.

11. Autositz (1) nach einem der Ansprüche 1 bis 10, **dadurch gekennzeichnet, dass** die starre Rückenlehnenstruktur (20) und/oder die starre Sitzflächenstruktur (30) zumindest teilweise aus tiefgezogenem Blech gefertigt ist.

12. Autositz (1) nach einem der Ansprüche 1 bis 11, **dadurch gekennzeichnet, dass** die Sitzfläche (12) und die Rückenlehne (11) eine zusammengefaltete Stellung, in welcher die Sitzfläche (12) gegen die Rückenlehne (11) zurückgeführt ist, um eine kompakte Einheit zu bilden, und eine entfaltete Stellung, in welcher ein Kind in den Sitz gesetzt werden kann, einnehmen können.

13. Autositz (1) nach Anspruch 10 und 12, **dadurch gekennzeichnet, dass** das nahe Ende der Sitzflächenstruktur (30) an einer Achse (306) befestigt ist, die sich zwischen den unteren Enden der seitlichen Ränder (301, 302) der Rückenlehnenstruktur (20) erstreckt.

14. Autositz (1) nach einem der Ansprüche 1 bis 13, **dadurch gekennzeichnet, dass** zwei Zangen zur Verbindung (309, 310) an dafür vorgesehenen Stellen in dem Fahrzeug drehbeweglich an der Basis der Rückenlehne (11) unabhängig voneinander befestigt sind.

15. Autositz (1) nach einem der Ansprüche 1 bis 14, **dadurch gekennzeichnet, dass** zwei Zangen zur Verbindung (309, 310) an dafür vorgesehenen Stellen in dem Fahrzeug an der Basis der Rückenlehne (11) befestigt sind, die zwischen einer ausgefahrenen Stellung, die die Verbindung ermöglicht, und einer Verstaustellung in einer dafür in der Rückenlehne (11) vorgesehenen Aufnahme beweglich sind.

## Claims

1. Child car seat (1), comprising a seat base (12) and a seat back (11),
said seat back (11) having a rigid seat back structure (20) of which the width at its top is less than the width of its base, an upper portion of said seat back structure (20) having two holes (204, 205) for passing a harness strap, **characterised in that** a lower portion of said seat back structure (20) is recessed between lateral uprights (201, 202), said lower portion extending over a height that represents between one-third and two-thirds of the total height of said back structure (20).

2. Car seat (1) according to claim 1, **characterised in that** said seat back structure (20) has the general shape of an A, of which the lateral uprights (201, 202) come close to one another, from the base of said seat back (11) to its upper end.

3. Car seat (1) according to any of claims 1 and 2, **characterised in that** said upper portion extends over a height that represents between one-third and two-thirds of the total height of the seat back (11).

4. Car seat (1) according to any of claims 1 to 3, **characterised in that** said rigid seat back structure (20) is formed from two lateral units, each comprising one of the lateral uprights (201, 202) and one of said holes (204, 205) for passing a strap, made integral by at least one reinforcing element (207).

5. Car seat (1) according to claim 4, **characterised in that** said rigid seat back structure (20) comprises two reinforcing elements (208, 209), respectively at the upper end and at the lower end of said upper portion.

6. Car seat (1) according to any of claims 4 and 5, **characterised in that** at least one of said reinforcing elements guide and/or retain a fastening strap (218), referred to as "top tether" strap, allowing for the attaching of an upper portion of the seat back (11) of said seat with an anchoring point provided for this purpose in a vehicle.

7. Car seat (1) according to any of claims 1 to 6, **characterised in that** each one of said lateral uprights (201, 202) carries, at its lower end, an anchoring element (216, 217) of one of the straps.

8. Car seat (1) according to any of claims 1 to 7, **characterised in that** said seat base (12) has a rigid seat base structure (30) in the general shape of an A, of which the lateral edges (301, 302) come close to one another, from its proximal end (303), close to the seat back (11), to its distal end (304), moved away from the seat back (11).

9. Car seat (1) according to claim 8, **characterised in that** said seat base structure (30) defines a substantially triangular shape, recessed inside, with the distal end (304) defining a zone for anchoring (307) a crotch support and/or a "top tether" strap idler.

10. Car seat (1) according to any of claims 8 and 9, **characterised in that** the proximal end (303) of said seat base structure (30) is included between the lower ends of the lateral edges (201, 202) of said seat back structure (20).

11. Car seat according to any of claims 1 to 10, **characterised in that** said rigid seat back structure (20) and/or rigid seat base structure (30) is made at least in part from stamped sheet metal.

12. Car seat (1) according to any of claims 1 to 11, **characterised in that** said seat base (12) and said seat back (11) can have a folded position, in which said seat base (12) is brought back against said seat back (11), in order to form a compact unit, and an unfolded position, in which a child can be installed in said seat.

13. Car seat (1) according to claims 10 and 12, **characterised in that** the proximal end of said seat base structure (30) is mounted on an axis (306) extending between the lower ends of the lateral edges (301, 302) of said seat back structure (20).

14. Car seat (1) according to any of claims 1 to 13, **characterised in that** two clips (309, 310) for connecting to locations provided for this purpose in the vehicle are movably mounted in rotation at the base of said seat back (11), independently of one another.

15. Car seat (1) according to any of claims 1 to 14, **characterised in that** two clips (309, 310) for connecting to locations provided for this purpose in the vehicle are movably mounted at the base of said seat back (11), between a deployed position, allowing said connection, and a storage position, in a housing provided for this purpose in said seat back (11).
